# DEMANDE DE BREVET EUROPEEN

(11) **EP 2 210 783 A1**
(43) Date de publication de la demande: **28.07.2010**
(21) Numéro de dépôt: 09179224.2
(22) Date de dépôt: 15.12.2009
(51) Int. Cl.: B60R 13/08

(54) **Écran acoustique**

(30) Priorité: 20.01.2009 FR 0950326
(71) Demandeur: Peugeot Citroën Automobiles SA, 78140 Vélizy-Villacoublay (FR)
(72) Inventeur: Sauvage, Olivier, 92800, Puteaux (FR); Tanneau, Olivier, 93400, Saint-Ouen (FR)

(57) **Abrégé**

La présente invention concerne un écran acoustique comprenant une première paroi (1) extérieure, une deuxième paroi (5) perforée de trous en regard de la source de bruit, une structure (8) située entre les deux parois (1, 5) formant des volumes creux (2) en communication avec des trous (6) dans la deuxième paroi (5) formant avec cette dernière un système de résonance de Helmholtz. Selon l'invention, au moins l'une des parois (1, 5) est fixée sur la structure (8) par l'intermédiaire d'un matériau dissipatif (7), ledit matériau dissipatif étant intercalé à l'interface de la structure (8) et d'au moins l'une des parois (1, 5).

La présente invention trouve une application particulière dans un dispositif d'absorption de bruit généré par un moteur de véhicule automobile.

## Description

La présente invention revendique la priorité de la demande française 0950326 déposée le 20 Janvier 2009 dont le contenu (texte, dessins et revendications) est ici incorporé par référence.

L'invention a pour objet un écran acoustique destiné à isoler une source de bruit de son environnement extérieur et à réduire la nuisance sonore générée par celle-ci. En particulier, la présente invention trouve son application dans un dispositif d'absorption de bruit généré par un moteur de véhicule automobile.

Il existe un grand nombre de concepts d'écrans apportant une isolation acoustique. La plupart sont des superpositions de différentes parois ou couches de différentes natures : perforées, en mousse, lames d'air, panneaux pleins, etc. L'agencement des différentes parois, leur architecture, leurs caractéristiques mécaniques et acoustiques sont les premiers facteurs permettant de les différencier et de caractériser l'absorption acoustique qu'ils permettront. Viennent ensuite, suivant les applications visées, des facteurs de coût, de masse, d'encombrement, de recyclabilité, et d'autres encore, qui privilégieront le choix d'un concept plutôt qu'un autre.

Par exemple, dans le cadre d'une utilisation automobile, un tel système d'écran peut être utilisé pour absorber tout ou partie du bruit du « haut moteur » du reste du véhicule et de l'extérieur. Un tel écran remplit alors la fonction acoustique souvent demandée pour les « cache-style » présents dans les compartiments moteur des véhicules automobiles.

Dans un compartiment moteur, la partie haute du moteur appelé "haut moteur" se trouve à proximité d'un capot faisant partie de la caisse du véhicule et fermant le compartiment logeant le moteur. Les contraintes des chocs avec un piéton amènent, entre autres contraintes, à ce qu'un espace libre soit aménagé entre le capot et le haut moteur. Cet espace libre a pour but de permettre l'enfoncement progressif du capot lors d'une collision avec un piéton. Lors d'une collision et pendant l'enfoncement du capot, le capot ne doit pas être en contact avec une partie indéformable ou quasi-indéformable d'un composant du haut moteur, ceci afin de réduire la gravité des blessures causées au piéton.

Dans certaines conceptions de véhicule, la place laissée libre pour implanter le cache-style peut être de ce fait limité. Une autre contrainte intervenant dans la conception de tels écrans est la recyclabilité des matériaux employés.

Un cache de moteur comprenant par exemple une mousse insonorisante de type polyuréthane disposée entre le haut du moteur et la face interne de l'écran présente l'inconvénient d'être assez épais et peu recyclable. D'autres solutions existent comme l'utilisation des systèmes à résonateurs de Helmholtz pour jouer le rôle d'absorbants acoustiques. La demande de brevet français FR-2 899 536 A décrit un tel dispositif d'absorption du bruit généré par un moteur de véhicule automobile utilisant un système à résonateurs de Helmholtz.

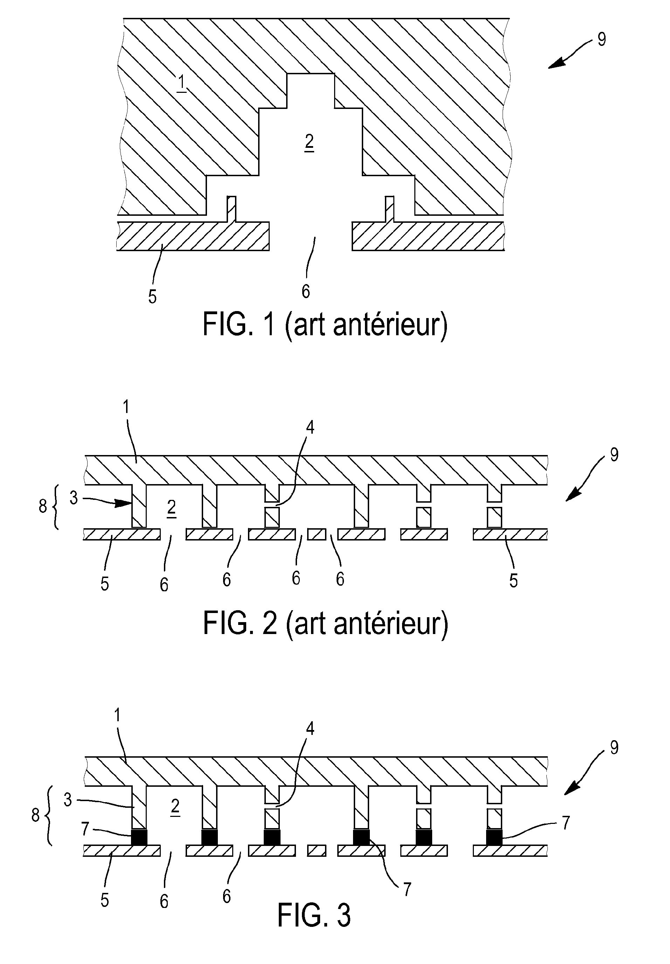

Dans un exemple décrit dans cette demande de brevet français, comme le montre la figure 1, le cache moteur est physiquement divisé en une partie inférieure 5 et une partie supérieure 1, assemblées l'une sur l'autre. La partie inférieure 5 est située en regard du moteur et est délimitée par une face interne en regard de la partie supérieure 1 et une face extérieure en regard du moteur. Cette partie inférieure comprend des perforations 6 formant chacune l'entrée d'un volume creux 2 formant une cavité résonante de Helmholtz. Les cavités résonantes sont obtenues directement lors du moulage de la partie supérieure 1 lors de sa fabrication.

Cette solution a l'avantage de présenter une épaisseur faible par rapport à des solutions utilisant une mousse absorbante et d'être bien mieux recyclable.

Le but de la présente invention est de proposer un écran acoustique ayant des cavités résonantes de Helmholtz et destiné à réduire encore plus efficacement le bruit et les vibrations générées par la source à traiter.

Pour atteindre ce but, l'invention propose un écran acoustique comprenant une première paroi extérieure, une deuxième paroi perforée de trous en regard de la source de bruit, une structure située entre les deux parois ayant des volumes creux en communication avec les trous de la deuxième paroi et formant avec cette dernière un système de résonance de Helmholtz, dans lequel au moins l'une des parois est fixée sur la structure par l'intermédiaire d'un matériau dissipatif, ledit matériau dissipatif étant intercalé à l'interface de la structure et d'au moins l'une des parois.

L'idée originale de l'invention proposée ici est donc de combiner le principe d'amortissement par effet sandwich avec la mise en place des résonateurs de Helmholtz en intercalant un matériau dissipatif soit entre la paroi perforée et la structure ayant des volumes creux en communication avec des trous dans la deuxième paroi, soit entre la première paroi et cette structure.

Selon une autre caractéristique de l'invention, la structure est monobloc avec la première paroi ou bien avec la deuxième paroi.

Selon une autre caractéristique de l'invention, le matériau ayant des propriétés de dissipation d'énergie vibratoire a des propriétés proches de la viscoélasticité.

Selon une autre caractéristique de l'invention, le matériau dissipatif est réalisé sous forme d'une couche recouvrant tout ou partie de l'interface entre la structure et au moins l'une des parois.

Selon un mode de réalisation de l'invention, le matériau dissipatif est un adhésif manifestant un comportement type viscoélastique.

Selon un autre mode de réalisation de l'invention, au moins l'une des parois est réalisée en matière plastique, typiquement en polyamide.

Selon un autre mode de réalisation de l'invention, la deuxième paroi est réalisée par un matériau tissé ayant une porosité convenable.

Selon un autre mode de réalisation de l'invention, dans la structure au moins une partie des volumes creux sont reliés entre eux par des trous latéraux.

Selon une caractéristique de l'invention, en fonction de la gamme de fréquence à absorber et du dimensionnement prévu pour les résonateurs acoustiques de Helmholtz, le matériau dissipatif est choisi selon son facteur d'amortissement, son module de cisaillement et la variation de ceux-ci en fonction de la fréquence à absorber.

Selon une autre caractéristique de l'invention, un cache de moteur d'un véhicule automobile est proposé comprenant un écran acoustique comme décrit ci-dessus.

D'autres caractéristiques et avantages de la présente invention ressortiront de la description ci-après faite en référence aux figures. Dans ces figures:
o la figure 1 est une vue de coupe montrant un cache de moteur selon l'art antérieur de façon très schématique ;
o la figure 2 est une vue en coupe montrant la formation des résonateurs de Helmholtz selon l'art antérieur de façon très schématique;
o la figure 3 montre le schéma de principe du mode de réalisation de la présente invention.

La figure 2 est une vue schématique du principe sur lequel le mode de réalisation est basé tel que montré sur la figure 1 : c'est-à-dire sur une paroi extérieure 1 d'un cache de moteur sont réparties une pluralité de cavités 2 séparées par des cloisons 3 qui les forment. Des trous 4 peuvent également exister entre les cellules, à travers les cloisons 3. Les cavités 2 sont partiellement fermées du côté source de bruit par une deuxième paroi 5 ayant des perforations 6.

Ainsi, des effets acoustiques de couplage entre le champ généré par la source de bruit et les cavités résonantes de Helmholtz sont créés, qui peut absorber les bruits émis d'un moteur de véhicule automobile, par exemple.

Si cet écran acoustique 9 est monté sur un moteur comme cache de moteur, cet écran subit, en plus du champ acoustique rayonné par le moteur, les vibrations solidiennes qu'il provoque.

L'idée sur laquelle est basée la présente invention réside dans l'ajout d'un effet d'atténuation des vibrations de la structure de l'écran 9 ce qui réduit davantage le bruit et les vibrations. Comme le montre la figure 3, en utilisant aussi la deuxième paroi 5 perforée ainsi ajoutée comme paroi de précontrainte, associée à un matériau dissipatif 7 de type viscoélastique inséré entre la structure 8 des cellules formées par des cloisons 3 au niveau de leur jonction, on hybride ainsi de manière efficace la technique des résonateurs de Helmholtz expliqués ci-dessus et la technique souvent utilisée dans les systèmes "sandwich" de cisaillement d'un viscoélastique entre deux parties de plus forte raideur.

La technique des "sandwich" est un concept souvent utilisé afin d'apporter un amortissement significatif à des structures raides. L'idée est de faire se déformer, de préférence en cisaillement, un matériau à fort pouvoir dissipatif entre deux parties plus raides. Il en résulte une dissipation d'une partie de l'énergie vibratoire, apportée par exemple par un moteur.

En intercalant un matériau dissipatif 7, comme le montre la figure 3, entre la paroi perforée et les cloisons 3, ces principes d'amortissement par effet sandwich et par effet de résonateurs de Helmholtz sont combinés. Ceci peut recouvrir tout ou une partie de l'origine de l'interface entre les deux parois 1, 5. Le matériau utilisé à l'interface peut également servir d'adhésif entre les deux parties si ce mode de fixation est préféré.

Les principaux paramètres de dimensionnement permettant de maîtriser cet effet "sandwich" sont:
- le comportement mécanique dynamique du matériau dissipatif utilisé, notamment son facteur de perte (amortissement), son module de cisaillement et la variation de ceux-ci en fonction de la fréquence et de la température ;
- les dimensions de la couche dissipative comme épaisseur, étendue, distribution sur l'interface;
- le comportement mécanique des deux parois entre lesquelles le matériau dissipatif formant "l'âme" du sandwich va être déformé.

Ces paramètres sont à ajuster en fonction de l'effet d'amortissement structural que l'on souhaite apporter, c'est-à-dire la gamme de fréquence à absorber et son association avec l'effet d'absorption acoustique assuré par les résonateurs de Helmholtz.

De nombreuses variantes sont possibles, selon que l'on traite toute l'interface ou non, que l'on autorise aucun ou un grand nombre de trous latéraux 4 pour les résonateurs qui peuvent alors se situer à l'interface dans des zones non remplies par le matériau dissipatif 7.

La paroi perforée 5 peut être remplacée par un matériau tissé ayant des propriétés acoustiques convenables, notamment en termes de porosité. Les cloisons des volumes creux 2 de la structure 8 peuvent également être portées par la paroi perforée 5 au lieu d'être monobloc avec la paroi principale 1 du système d'écran 9. Dans ce cas le matériau dissipatif 7 est situé entre les cloisons 3 et la paroi 1.

Un tel écran, comme décrit ci-dessus, trouve son utilisation de préférence, mais pas exclusivement, dans un dispositif d'absorption de bruit généré par un moteur de véhicule automobile, dit cache de moteur.

## Revendications

1. Ecran acoustique comprenant une première paroi (1) extérieure, une deuxième paroi (5) perforée de trous en regard de la source de bruit, une structure (8) située entre les deux parois (1, 5) formant des volumes creux (2) en communication avec des trous (6) dans la deuxième paroi (5) formant avec cette dernière un système de résonance de Helmholtz, **caractérisé en ce que** au moins l'une des parois (1, 5) est fixée sur la structure (8) par l'intermédiaire d'un matériau dissipatif (7), ledit matériau dissipatif étant intercalé à l'interface de la structure (8) et d'au moins l'une des parois (1, 5).

2. Ecran acoustique selon la revendication 1 **caractérisé en ce que** la structure (8) est monobloc avec la première paroi (1).

3. Ecran acoustique selon la revendication 1, **caractérisé en ce que** la structure (8) est monobloc avec la deuxième paroi (5).

4. Ecran selon au moins une des revendications précédentes, **caractérisé en ce que** le matériau dissipatif (7) a des propriétés de comportement viscoélastiques.

5. Ecran selon au moins une des revendications précédentes, **caractérisé en ce que** le matériau dissipatif (7) est réalisé sous forme d'une couche recouvrant tout ou une partie de l'interface entre la structure (8) et au moins l'une des parois (1, 5).

6. Ecran selon au moins une des revendications 1 à 4, **caractérisé en ce que** le matériau dissipatif (7) est un adhésif du type viscoélastique.

7. Ecran selon au moins une des revendications précédentes, **caractérisé en ce que** au moins l'une des parois (1, 5) est réalisée en matière plastique, typiquement en polyamide.

8. Ecran selon au moins une des revendications précédentes, **caractérisé en ce que** la deuxième paroi (5) est réalisée par un matériau tissé ayant une porosité convenable.

9. Ecran selon au moins une des revendications précédentes, **caractérisé en ce que** dans la structure (8) au moins une partie des volumes creux (2) sont reliés entre eux par des trous latéraux (4).

10. Ecran selon au moins une des revendications précédentes, **caractérisé en ce que**, en fonction de la gamme de fréquence a absorber, le matériau dissipatif (7) est choisi selon son facteur d'amortissement, son module de cisaillement et la variation de ceux-ci en fonction de la fréquence.

11. Cache de moteur d'un véhicule automobile comprenant un écran acoustique (9) selon au moins une des revendications précédentes.
